# EUROPÄISCHE PATENTANMELDUNG

(11) **EP 4 432 602 A1**
(43) Veröffentlichungstag der Anmeldung: **18.09.2024**
(21) Anmeldenummer: 23161621.0
(22) Anmeldetag: 13.03.2023
(51) Int. Cl.: H04L 9/40, H04L 9/32, H04L 67/12

(54) **VERFAHREN ZUR AUSSTELLUNG EINES ZERTIFIKATS UND COMPUTERIMPLEMENTIERTE REGISTRIERUNGSSTELLE**

(71) Anmelder: Siemens Aktiengesellschaft, 80333 München (DE)
(72) Erfinder: Palmin, Anna, 76187 Karlsruhe (DE)
(74) Vertreter: Siemens Patent Attorneys

(57) **Zusammenfassung**

Vorgeschlagen wird ein Verfahren zur Ausstellung eines Zertifikats an eine Anlagenkomponente (2) einer technischen Anlage durch eine computerimplementierte Zertifizierungsstelle (5) der technischen Anlage, umfassend:
a) Übermitteln eines von der Anlagenkomponente (2) gestellten Zertifikatsantrages an eine computerimplementierte Registrierungsstelle (3) der technischen Anlage;
b) Durch einen computerimplementierten Inventardienst (6a, 6b) der computerimplementierten Registrierungsstelle (3) und unter Einbezug von vorherbestimmten und der Registrierungsstelle (3) zugänglichen Regeln, automatisiertes Bestimmen, welches computerimplementierte Geräteinventar (4a, 4b, 4c) einer Mehrzahl von computerimplementierten Geräteinventaren (4a, 4b, 4c) der technischen Anlage der Anlagenkomponente (2) zugeordnet ist;
c) Weiterleiten des Zertifikatsantrages durch die computerimplementierten Registrierungsstelle (3) an die computerimplementierte Zertifizierungsstelle (5);
d) Ausstellen des durch den Zertifikatsantrag beantragten Zertifikats durch die Zertifizierungsstelle (5) und Hinterlegen des ausgestellten Zertifikats in dem zuvor bestimmten Geräteinventar (4a, 4b, 4c).

## Beschreibung

Die Erfindung betrifft ein Verfahren zur Ausstellung eines Zertifikats an eine Anlagenkomponente einer technischen Anlage durch eine computerimplementierte Zertifizierungsstelle der technischen Anlage. Außerdem betrifft die Erfindung eine computerimplementierte Registrierungsstelle und ein System.

Sichere Kommunikationsprotokolle wie z.B. HTTPS oder OPC UA finden zunehmend Einzug in technischen Anlagen (genauer gesagt sowohl in den diskreten als auch in den verfahrenstechnischen Anlagen). Die Verwendung dieser Protokolle setzt die Benutzung von sog. digitalen Zertifikaten nach dem Standard X.509 voraus.

Neben der sicheren Kommunikation ist für den optimalen Schutz einer (industriellen) technischen Anlage die Einhaltung einer sicheren Gerätekonfiguration im Einklang mit verschiedenen Security-Anforderungen wie z.B. "Security by Default" und "Least Functionality" erforderlich. Gemäß den aktuellen Security-Konzepten werden die Anlagenkomponenten vor der Inbetriebnahme im Einklang mit dem Security-Konzept der Anlage unter Verwendung der sog. Herstellergerätezertifikate (IDevID Cert. nach IEEE802.1AR) auf die Originalität geprüft, provisioniert und anschließend sicher (d.h. gemäß dem o.g. Security-Konzept und darauf basierenden Security-Policies) konfiguriert. Erst dann dürfen die Anlagenkomponenten die erforderlichen kundenspezifischen Zertifikate (LDevID Cert nach IEEE802.1AR) beantragen und anschließend mit ihren Kommunikationspartnern unter Verwendung dieser Zertifikate sicher kommunizieren.

Die Komponenten einer technischen Anlage kommunizieren in der Regel mit mehr als einem Kommunikationspartner und nutzen dabei mehr als ein sicheres Kommunikationsprotokoll. Beispielsweise kann ein industrielles Automatisierungssystem (AS) in der Regel sein webbasiertes User Interface per HTTPS für den Benutzerzugriff bereitstellen (wobei ein zugehöriges TLS Server Zertifikat zum Einsatz kommt) und gleichzeitig (in Rolle des OPC UA Server) per OPC UA mit den zugehörigen OPC UA-Clients kommunizieren. Deswegen sollten die Anlagenkomponenten in der Regel mehrere Zertifikate (LDevID Cert.) beantragen, wobei es aus Security-Sicht empfehlenswert ist, ein dedizierts Zertifikat pro Verwendungszweck zu beantragen bzw. zu nutzen.

Die Beantragung von den für die Kommunikation benötigten Zertifikaten erfolgt nach den aktuellen PKI-Konzepten über eine Registrierungsstelle (engl. Registration Authority (RA)), die die Rolle eines intelligenten Gateways spielt. Intelligente Anlagenkomponenten (wie z.B. Netzwerkkomponenten oder Industrial Controller sowie OS-/ES-Server und Industrial Edge-Komponenten), die ein Zertifikatsmanagementprotokoll wie z.B. das Certificate Management Protocol (CMP) nach RFC 4210 bzw. nach dem Lightweight CMP Profile unterstützen, generieren dazu einen entsprechenden Zertifikatsantrag und übermitteln diesen an die Registrierungsstelle.

Da in der Regel jedes zu einem bestimmten Zweck ausgestellte Zertifikat während seines Lebenszyklus nicht nur initial beantragt, sondern auch erneuert und/oder revoziert werden soll/kann, bietet beispielswese das o.g. CMP-Protokoll verschiedene sog. CMP-Messages, anhand deren die jeweilige Art des Zertifikatsantrags (bzw. der jeweilige zugrundeliegende Use Case) erkannt werden kann. Bekommt die Registrierungsstelle beispielsweise eine sog. IR-Message ("Initial Request") von einer Anlagenkomponente zugeschickt, so erkennt sie daran, dass es sich um eine initiale (erstmalige) Beantragung eines bestimmten Zertifikats handelt. An einer CR- bzw. RR-Message erkennt sie einen Antrag zur Erneuerung bzw. zur Revokation eines bestehenden Zertifikats.

Die Registrierungsstelle prüft die bei ihr eingehenden Zertifikatsanträge in der Regel wie folgt:
(I) Prüfung, ob es einen Inventory-Eintrag zum Antragsteller gibt, der bestimmte im Zertifikatsantrag enthaltenen Daten, die den Antragsteller identifizieren (insb. dessen ID), in einem Geräteinventar der Registrierungsstelle (oder einem dedizierten Geräteinventar) enthält, d.h. ob der Antragsteller ihr bekannt ist. Falls das Ergebnis der Prüfung nicht ok ist: Zertifikatsantrag wird abgelehnt. Falls das Ergebnis der Prüfung ok ist, gehe zu Schritt II.
(II) Prüfung, ob der Zertifikatsantrag, genauer gesagt dessen Signatur nach RFC5280, korrekt und valide ist (was grob bedeutet, dass die Signatur des Zertifikatsantrags zum Zertifikatsantrag "passt"). Falls das Ergebnis der Prüfung nicht ok ist: Zertifikatsantrag wird abgelehnt. Falls das Ergebnis der Prüfung ok ist, gehe zu Schritt (III).
(III) Prüfung, ob das zum Signieren des Zertifikatsantrags verwendete Zertifikat von einer (der Registrierungsstelle bekannten) Zertifizierungsstelle ausgestellt wurde, zu der die Registrierungsstelle bereits eine Vertrauensbeziehung hat (was beispielsweise bedeuten kann, dass die zugehörige "Certificate Chain" in der Konfiguration der Registrierungsstelle und/oder deren "Certificate Store" entsprechend abgelegt ist). Falls das Ergebnis der Prüfung nicht ok ist: Zertifikatsantrag wird abgelehnt. Falls das Ergebnis der Prüfung ok ist, wird der Zertifikatsantrag an die entsprechende Zertifizierungsstelle (die z.B. in der CMP-Message genannt oder in der Konfiguration angegeben ist) weitergeleitet.

In der EP 3 258 662 A1 ist ein Verfahren zur Registrierung eines intelligenten elektrischen Gerätes bei einer Zertifizierungsstelle offenbart.

Die US 5 745 574 A offenbart eine Sicherheitsinfrastruktur mit einer Vielzahl an Zertifizierungsstellen.

Die EP 3 287 925 A1 offenbart eine Computervorrichtung zum Übertragen eines Zertifikats auf ein Gerät in einer Anlage.

In der WO 2020/078750 A1 ist ein Verfahren zum sicheren Betreiben eines industriellen Automatisierungsgeräts in einem Automatisierungssystem offenbart. Im Rahmen dessen wird eine Registrierungsstelle zum Entgegennehmen und Weiterleiten von Zertifikatsanträgen beschrieben.

Das Geräteinventar der Registrierungsstelle spielt eine wichtige Rolle zur Laufzeit der technischen Anlage, da alle Geräte/Anlagenkomponenten, die in dem Geräteinventar registriert sind, über dieses Geräteinventar anschließend die Erneuerung/Revokation der für sie einmal ausgestellten Zertifikate beantragen können. Bei der Validierung der Zertifikatsanträge werden dann die im Geräteinventar hinterlegten Daten verwendet.

Wird beispielsweise von einer Anlagenkomponente durch einen sog. Key Update Request (KUR) ein Update eines LDevID-Zertifikats (möglicherweise direkt oder über eine lokale Registrierungsstelle) beantragt, so prüft die Registrierungsstelle im Rahmen der KUR-Validierung, u.a. ob das zu erneuernde Zertifikat (bereits) in dem Geräteinventar abgelegt ist. Im Falle einer erfolgreichen Validierung wird der Zertifikatsantrag an die entsprechende Zertifizierungsstelle weitergeleitet. Das von dieser Zertifizierungsstelle ausgestellte Zertifikat wird anschließend zwecks Rückverfolgbarkeit und der Ermöglichung der weiteren Validierungen in dem Geräteinventar abgelegt.

In den Produktions- bzw. Fertigungswerken werden in der Regel - neben den oben erwähnten LDevID-Zertifikaten, die für die in den Werken eingesetzten Anlagenkomponenten ausgestellt werden, um beispielsweise die vorgeschriebene Verwendung von sicheren Kommunikationsprotokollen zu ermöglichen - auch die sog. Initial Device Identifier (IDevID)-Zertifikate nach IEEE 802.1AR ausgestellt. Derartige Zertifikate dienen zum Schutz gegen Nachbau und Plagiat der OT-/IoT-Komponenten. Anhand eines solchen Zertifikats in Kombination mit dem zugehörigen Private Key (Secret) und der zugehörigen Certificate Chain kann ein Gerät beim Einsatz in einer operativen Umgebung seine Identität/ Originalität gegenüber einer entsprechenden Instanz (die häufig wie z.B. in BRSKI, OPC UA Part 21 als Registrar bezeichnet wird) beweisen.

Die Ausstellung der IDevID-Zertifikate erfolgt im Rahmen des sog. IDevID-Imprintings als eines wichtigen Schrittes während der Fertigung der industriellen Anlagenkomponenten. Dazu kommen in der Regel eine separate (werksspezifische) Registrierungsstelle, eine separate Zertifizierungsstellen(CA)-Hierarchie und ein separates (werkspezifisches und/oder herstellerspezifisches und ggf. werksübergreifendes) Geräteinventar zum Einsatz. Es ist aktuell nicht eindeutig definiert, welche Daten in diesem Geräteinventar hinterlegt sind.

Gemäß den oben aufgeführten Erläuterungen werden in werkspezifischen/produktionsspezifischen Umgebungen nach den aktuellen Konzepten (mindestens) zwei Public Key Infrastrukturen (PKIs) und zwei Geräteinventar-Instanzen benötigt, die insbesondere die folgenden Registrierungsstellen beinhalten:
- eine Registrierungsstelle zum Ausstellen von IDevID-Zertifikaten;
- eine Registrierungsstelle zum Ausstellen von LDevID-Zertifikaten.

Die Registrierungsstelle als die zentrale Komponente einer PKI muss somit in doppelter Ausführung aufgesetzt, sicher konfiguriert und durch den Einsatz entsprechender Mechanismen (wie z.B. Whitelisting) gegen die (durch ein Threat and Risk Assessment ermittelten) relevanten Bedrohungen adäquat gehärtet sowie (unter Berücksichtigung der relevanten Vorgaben und Policies) sicher betrieben und gewartet werden.

Alle diese Maßnahmen sind zum aktuellen Stand erfahrungsgemäß mit einem relativ hohen Aufwand verbunden und erfordern die Miteinbeziehung der Security-Experten und weiterer relevanter Experten. Durch den Einsatz von zwei Registrierungsstellen verdoppelt sich der Aufwand. Besonders stark steigt dieser Aufwand in dem Fall, dass in einem (größeren) Werk, in welchem mehrere Produktfamilien gefertigt werden, die Verwendung von mehreren dedizierten produktspezifischen Geräteinventaren (und somit von mehreren zugehörigen Registrierungsstellen) gefordert wird. Dies kann beispielsweise dadurch bedingt sein, dass das ein für eine bestimmte Produktfamilie zuständiges Geräteinventar in einer cloudbasierten Umgebung realisiert ist, während das für eine weitere Produktfamilie zuständige Geräteinventar gemäß den Anforderungen der zuständigen Produktionsverantwortlichen on-premise im Werk betrieben wird.

Überdies ist zu beachten, dass die Vorgabe hinsichtlich der Verwendung eines bestimmten Geräteinventars zu einem bestimmten Zweck sich im Laufe der Zeit in Abhängigkeit von bestimmten, ggf. dynamischen Faktoren ändern kann. Beispielweise kann es sich als sinnvoll oder sogar als notwendig erweisen, (ggf. wegen den vermehrten anhand der erfassten Security-Events erkannten Angriffen und/oder im Netzwerk erfassten Anomalien) auf ein anderes Geräteinventar umzusteigen oder zwecks Redundanz zwei Geräteinventare (beispielsweise eins in der Cloud und eins on-premise) zu einem bestimmten Zweck gleichzeitig zu nutzen.

Die zuvor erläuterten Problem erweist sich insbesondere im Zero Trust-Kontext ("Never trust - always verify") als gravierend, da hier die Identitäts- und Originalitätsprüfung sowie die Authentifizierung eine besonders wichtige Rolle spielen und für die Authentifizierung Zertifikate benötigt werden. Dabei ist es bei bestimmten Szenarien erforderlich, dass unterschiedliche / getrennte Geräteinventare zum Einsatz kommen, z.B.
a) wie oben erläutert für IDevID-Zertifikate und LDevID-Zertifikate,
b) für IDevID-Zertifikate für zwei getrennte Produktfamilien, oder
c) für LDevID-Zertifikate für zwei getrennte Teilanlagen.

Der Erfindung liegt die Aufgabe zugrunde, ein Verfahren zur Ausstellung eines Zertifikats für eine Anlagenkomponente einer technischen Anlage anzugeben, dass die zuvor ausgeführten Nachteile vermeidet und ein effizienteres Zertifikatsmanagement der technischen Anlage ermöglicht.

Diese Aufgabe wird gelöst durch ein Verfahren mit den Merkmalen des Anspruchs 1. Außerdem wird die Aufgabe gelöst durch eine computerimplementierte Registrierungsstelle gemäß Anspruch 10. Zudem wird die Aufgabe gelöst durch ein System gemäß Anspruch 15. Vorteilhafte Weiterbildungen ergeben sich aus den abhängigen Ansprüchen.

Ein erfindungsgemäßes Verfahren zur Ausstellung eines Zertifikats an eine Anlagenkomponente einer technischen Anlage durch eine computerimplementierte Zertifizierungsstelle der technischen Anlage umfasst die folgenden Verfahrensschritte:
a) Übermitteln eines von der Anlagenkomponente gestellten Zertifikatsantrages an eine computerimplementierte Registrierungsstelle der technischen Anlage;
b) Durch einen computerimplementierten Inventardienst der computerimplementierten Registrierungsstelle und unter Einbezug von vorherbestimmten und der Registrierungsstelle zugänglichen Regeln, automatisiertes Bestimmen, welches computerimplementierte Geräteinventar einer Mehrzahl von computerimplementierten Geräteinventaren der technischen Anlage der Anlagenkomponente zugeordnet ist;
c) Weiterleiten des Zertifikatsantrages durch die computerimplementierten Registrierungsstelle an die computerimplementierte Zertifizierungsstelle;
d) Ausstellen des durch den Zertifikatsantrag beantragten Zertifikats und Hinterlegen des ausgestellten Zertifikats in dem zuvor bestimmten Geräteinventar.

Unter einem Zertifikat wird ein digitaler Datensatz verstanden, der bestimmte Eigenschaften (in diesem Fall von Maschinen, Geräten, Applikationen und dergleichen) bestätigt. Eine Authentizität und Integrität des Zertifikats können in der Regel mittels kryptografischer Verfahren verifiziert werden. Ein Zertifikat wird für den Einsatz einer Anlagenkomponente in der technischen Anlage von einer Zertifizierungsstelle ausgestellt, die auch als eine sogenannte "Issuing CA (Certification Authority)" bezeichnet wird. Eine derartige Issuing CA ist in der Regel stets online und stellt, basierend auf eingehenden Zertifikatsanträgen, Zertifikate für diverse Antragsteller aus, die sie mit ihrem eigenen Issuing CA Zertifikat signiert. Die Vertrauenswürdigkeit der Issuing CA wird dadurch sichergestellt, dass ihr eigenes Issuing CA Zertifikat durch das Zertifikat einer vertrauenswürdigen Wurzelzertifizierungsstelle (auch als "Root CA" bezeichnet), die sich in einer abgesicherten Umgebung befindet, signiert ist. Hierbei ist zu beachten, dass die Root CA die meiste Zeit offline ist und nur dann - unter der Einhaltung strengster Sicherheitsvorkehrungen - aktiviert bzw. eingeschaltet wird, wenn sie ein Zertifikat für eine zugehörige Issuing CA ausstellen soll. Die Root CA kann sich außerhalb der technischen Anlage befinden.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Bei der Anlagenkomponente der technischen Anlage kann es sich um ein beliebiges Gerät oder eine computerimplementierte Applikation handeln, die für eine Kommunikation mit weiteren Komponenten der technischen Anlage der Authentifizierung durch eines oder mehrere Zertifikate bedarf. Anlagenkomponenten der technischen Anlage können beispielsweise Vorrichtungen wie Pumpen, Ventile, Motoren, Heizkessel und dergleichen, aber auch Softwareprogramme sein.

Um ein Zertifikat zu erhalten, das die Anlagenkomponente zur Interaktion mit weiteren Anlagenkomponenten innerhalb der technischen Anlage benötigt, muss die Anlagenkomponente einen an die Zertifizierungsstelle gerichteten Zertifikatsantrag stellen. Diesen Zertifikatsantrag übermittelt die Anlagenkomponente (oder ein Stellvertreter für die Anlagenkomponente) an die computerimplementierte Registrierungsstelle. Der Zertifikatsantrag ist daher mit anderen Worten ein Antrag der Anlagenkomponente an die Zertifizierungsstelle der technischen Anlage, der Anlagenkomponente ein Zertifikat auszustellen.

Es wird vorausgesetzt, dass die technische Anlage eine Mehrzahl von Geräteinventaren aufweist. Im Stand der Technik war hierfür eine Mehrzahl von Registrierungsstellen notwendig, denen jeweils ein Geräteinventar zugeordnet war. Im Rahmen eines erfindungsgemäßen Verfahrens bestimmt der computerimplementierte Inventardienst der Registrierungsstelle unter Einbezug von vorherbestimmten und der Registrierungsstelle zugänglichen Regeln automatisiert, welches computerimplementierte Geräteinventar der Anlagenkomponente zugeordnet ist. Das von der Zertifizierungsstelle auf den Zertifikatsantrag hin ausgestellte Zertifikat wird in dem bestimmten Geräteinventar hinterlegt.

Durch eine Anwendung eines erfindungsgemäßen Verfahrens wird ermöglicht, dass in einer heterogenen Anlage nur eine Registrierungsstelle, die mit Hilfe des intelligenten Inventardienstes mit beliebig vielen Geräteinventaren flexibel interagieren kann, zum Einsatz kommt. Dadurch kann der zum Aufsetzen, für eine sichere Konfiguration und Inbetriebnahme sowie für einen sicheren Betrieb der Registrierungsstelle erforderliche Aufwand stark reduziert werden, da nur eine einzige Registrierungsstelle zum Einsatz kommen muss. Damit kann ein fundierter Beitrag zur Erhöhung der Skalierbarkeit und Flexibilität geleistet werden, da mehrere, ggf. verschiedene Geräteinventare zu verschiedenen Zeitpunkten flexibel eingebunden / hinzugefügt werden können.

Vor der Weiterleitung des Zertifikatsantrages an die Zertifizierungsstelle kann vorteilhafterweise durch die Registrierungsstelle geprüft werden, ob der Zertifikatsantrag gültig ist. Hierfür kann die Registrierungsstelle auf Informationen bezüglich der Anlagenkomponente zurückgreifen, die in dem durch den Inventardienst bestimmten Geräteinventar hinterlegt sein können. Es kann beispielsweise sein, dass die Anlagenkomponente zuvor bereits gegenüber der technischen Anlage registriert worden ist und entsprechende Registrierungsinformationen in dem Geräteinventar hinterlegt worden sind. Die Bestimmung des die antragstellende Anlagenkomponente betreffende Geräteinventar durch den Inventardienst ermöglicht dabei ein gezieltes Abrufen dieser Registrierungsinformationen aus dem Geräteinventar und die effiziente Validierung des Zertifikatantrages. Überdies kann dabei zusätzlich beispielsweise auch das dem Antragsteller (der Anlagenkomponente oder deren Stellvertreter) zugeordnete Antragstellerprofil mitberücksichtigt werden, um zu prüfen, ob der Antragsteller das beantragte Zertifikat beantragen darf. Es kann auch beispielsweise bei der Validierung eines Erneuerungsantrags, der zu einem bestimmten Zertifikat gestellt wurde, als erstes geprüft werden, ob im jeweiligen, dem Antragsteller zugeordneten Geräteinventar das zu erneuernde Zertifikat hinterlegt ist und ggf., ob es erneuert werden soll.

Die Regeln können in einer der computerimplementierten Registrierungsstelle zugeordneten Konfigurationsdatenbank hinterlegt sein. In dieser Konfigurationsdatenbank können zusätzlich Informationen über vertrauenswürdige Zertifizierungsstellen oder Informationen bezüglich eines Betriebes der Registrierungsstelle hinterlegt sein. Die Konfigurationsdatenbank kann sich auf demselben Computer wie die Registrierungsstelle befinden. Es ist aber auch möglich, dass die Konfigurationsdatenbank in einer cloudbasierten Umgebung realisiert ist.

Die Regeln können durch einen Benutzer der technischen Anlage veränderbar sein. Für die Vornahme der Änderungen kann er sich einer speziellen Benutzeroberfläche der Registrierungsstelle bedienen. Die Regeln können alternativ oder zusätzlich auch im Rahmen eines maschinellen Lernens veränderbar sein.

Im Rahmen einer bevorzugten Weiterbildung der Erfindung wird in den Regeln ein Zertifikatsprofil des mit dem Zertifikatsantrag beantragten Zertifikats und/oder ein Antragstellerprofil eines Antragstellers, welcher den Zertifikatsantrag für die Anlagenkomponente stellt, berücksichtigt. Das Zertifikat weist ein bestimmtes Zertifikatsprofil (engl. Certificate Profile) auf. Dabei umfasst das Zertifikatsprofil einen Typ des Zertifikats. Bei einem Typ kann es sich beispielsweise um ein TLS (Transport Layer Security) Server Zertifikat, ein TLS Client Zertifikat, ein OPC UA (Open Platform Communications Unified Architecture) Server Zertifikat oder um ein OPC UA Client Zertifikat handeln. Gemäß dem zugewiesenen Zertifikatstyp und ggf. weiteren zusätzlichen Anforderungen kann das Zertifikatsprofil bestimmte Zertifikatsattribute gemäß dem ITU-T-Standard X.509 und deren Werte umfassen.

Im Rahmen der Erfindung kann zudem automatisiert geprüft werden, ob das bestimmte Zertifikatsprofil überhaupt von der Anlagenkomponente verwendet werden kann. Damit ist gemeint, dass geprüft wird, ob die Anlagenkomponente, die den Zertifikatsantrag an die Zertifizierungsstelle stellen will, technisch dazu in der Lage ist, das von ihr beantragte Zertifikat mit dem bestimmten Zertifikatsprofil zu benutzen. Dies wäre beispielsweise nicht der Fall, wenn eine Anlagenkomponente, die eigentlich nicht OPC UA-fähig ist, ein OPC UA Server-Zertifikat beantragt oder wenn eine Anlagenkomponente, die nicht als TLS-Server agieren kann, ein TLS Server-Zertifikat beantragt.

Im Rahmen einer zweiten Prüfungsstufe kann zusätzlich geprüft werden, ob der Anlagenkomponente, die den Zertifikatsantrag stellt, das bestimmte Zertifikatsprofil in der technischen Anlage zugewiesen werden darf. Mit anderen Worten wird nach der der Prüfung der grundsätzlichen Fähigkeit, das Zertifikat mit dem bestimmten Zertifikatsprofil zu verwenden, auch hinsichtlich dem tatsächlichen Bedarf innerhalb der technischen Anlage geprüft, das Zertifikat mit dem bestimmten Zertifikatsprofil in der technischen Anlage zu verwenden. Die zweite Stufe der Prüfung wäre beispielsweise dann ohne Erfolg, wenn die Anlagenkomponente zwar als Webserver agieren kann (weshalb die erste Stufe der Prüfung noch Erfolg hätte), diese Funktionalität jedoch im Kontext der jeweiligen Laufzeitumgebung der technischen Umgebung nicht gewünscht ist. Durch die erfolglose zweite Stufe der Prüfung wäre die gesamte Prüfung ohne Erfolg, weshalb der Zertifikatsantrag in diesem Fall nicht an die Zertifizierungsstelle übermittelt werden würde.

Die Prüfung, ob das bestimmte Zertifikatsprofil von der Anlagenkomponente verwendet werden kann, kann auch von der Anlagenkomponente selbst automatisiert vorgenommen werden, derart, dass die Anlagenkomponente nur für den Fall, dass die Prüfung erfolgreich ist, einen Zertifikatsantrag stellt. Für den Fall, dass ein Zertifikat mit einem bestimmten Zertifikatsprofil von der Anlagenkomponente nicht unterstützt wird, wird daher erst gar kein Zertifikatsantrag gestellt (und in der Konsequenz auch nicht an die Zertifizierungsstelle übermittelt). Für den Fall, dass die Anlagenkomponente eine Mehrzahl von Zertifikatsprofilen unterstützt, können diese in einem Geräteprofil zusammengefasst werden, um die Übersichtlichkeit zu erhöhen und das Management von Zertifikatsprofilen auf der Herstellerseite und auch in der operativen Einsatzumgebung zu vereinfachen und zuverlässiger zu gestalten.

Hierzu sind auf der Anlagenkomponente bevorzugt Informationen darüber hinterlegt, welche Zertifikatsprofile die Anlagenkomponente verwenden kann. Diese Informationen können von einem Hersteller der Anlagenkomponente, einem Originalgerätehersteller (OEM) der Anlagenkomponente oder einem Operator/Betreiber der Anlagenkomponente in der technischen Anlage auf der Anlagenkomponente hinterlegt worden sein.

Zusätzlich oder alternativ zur (ersten) Stufe der Prüfung durch die Anlagenkomponente selbst können die Prüfungen, ob das bestimmte Zertifikatsprofil von der Anlagenkomponente verwendet werden kann, und ob der Anlagenkomponente das bestimmte Zertifikatsprofil in der technischen Anlage zugewiesen werden darf, von der Registrierungsstelle der technischen Anlage vorgenommen werden, wobei die Registrierungsstelle die Prüfungen in Reaktion auf den von der Anlagenkomponente an die Registrierungsstelle gerichteten Zertifikatsantrag vornimmt, und wobei die Registrierungsstelle nur für den Fall, dass beide Prüfungen erfolgreich sind, den Zertifikatsantrag an die Zertifizierungsstelle übermittelt.

Die für die (erste) Prüfung, ob das bestimmte Zertifikatsprofil von der Anlagenkomponente verwendet werden kann, benötigten Informationen können dabei von einem Betreiber/Operator der technischen Anlage in der Registrierungsstelle hinterlegt worden sein. Auf Grundlage dieser Informationen kann die Registrierungsstelle den Zertifikatsantrag der Anlagenkomponente im Rahmen der ersten Stufe der zweistufigen Prüfung prüfen. Diese Prüfung ist insbesondere dann sinnvoll, wenn die Anlagenkomponente selbst nicht prüfen kann, ob das Zertifikatsprofil eines zu generierenden Zertifikatsantrags von der Anlagenkomponente verwendet werden kann. Stellt die Registrierungsstelle im Rahmen der ersten Stufe der Prüfung beispielsweise fest, dass ein Zertifikatsprofil (z.B. OPC UA) beantragt wurde, welches von der Anlagenkomponente (aufgrund deren Funktionsumfangs bzw. der von ihr unterstützten Kommunikationsprotokolle) nicht unterstützt wird, lehnt die Registrierungsstelle den Zertifikatsantrag ab und leitet ihn somit nicht an die Zertifizierungsstelle weiter.

Vorausgesetzt, dass die Anlagenkomponente zur Durchführung der ersten Stufe der Prüfung ausgebildet ist, kann die Anlagenkomponente der Registrierungsstelle mitteilen, dass die Prüfung, ob das bestimmte Zertifikatsprofil von der Anlagenkomponente verwendet werden kann, erfolgreich von der Anlagenkomponente selbst durchgeführt worden ist. In Reaktion hierauf kann die Registrierungsstelle auf eine erneute Prüfung, ob das bestimmte Zertifikatsprofil von der Anlagenkomponente verwendet werden kann, verzichten, um Ressourcen zu sparen.

Die zweite Stufe der Prüfung, also die Prüfung, ob der Anlagenkomponente das bestimmte Zertifikatsprofil in der technischen Anlage zugewiesen werden darf, kann auf der Grundlage von Vorgaben eines Operators erfolgen. Hierfür kann sich der Operator beispielsweise einer Nutzeroberfläche der Registrierungsstelle mit geeigneten Eingabemasken bedienen. Der Operator kann sogenannte Antragstellerprofile als Vorlagen verwenden, die er selbst oder ein Dritter zuvor definiert hat. In solch einem Antragstelleprofil werden die Zertifikatsprofile zusammengefast, die eine Anlagenkomponente in der technischen Anlage zugewiesen werden dürfen. Die Verwendung der Antragstellerprofile erleichtert die Konfiguration der zweiten Prüfung.

Die Prüfung, ob der Anlagenkomponente das bestimmte Zertifikatsprofil in der technischen Anlage zugewiesen werden darf, kann alternativ oder zusätzlich auf der Grundlage einer Automatisierung der technischen Anlage erfolgen. In der Automatisierung sind typischerweise Kommunikationsbeziehungen zwischen den einzelnen Anlagenkomponenten der technischen Anlage beschrieben, die einen direkten Einfluss darauf haben, welche Zertifikatstypen die Anlagenkomponenten jeweils benötigen. Beispielsweise die Registrierungsstelle kann diese Automatisierung, genau genommen eine entsprechende Datei, auslesen und für die zweite Prüfungsstufe automatische verwenden. Hierzu bedarf es keines Eingriffs durch einen Operator, wobei ein solcher jedoch nicht ausgeschlossen ist.

Änderungen an der Automatisierung der technischen Anlage können dabei von einem System erfasst werden, welches auf einem maschinellen Lernen basiert, wobei das System die Grundlagen für die Prüfung, ob der Anlagenkomponente das bestimmte Zertifikatsprofil in der technischen Anlage zugewiesen werden darf, in einem Bedarfsfall automatisch anpasst.

Bevorzugt wird das Ergebnis der der Prüfungen, ob das bestimmte Zertifikatsprofil von der Anlagenkomponente verwendet werden kann, und ob der Anlagenkomponente das bestimmte Zertifikatsprofil in der technischen Anlage zugewiesen werden darf, einem Operator der technischen Anlage visuell dargeboten. Dieser kann daraufhin etwaige Folgeaktionen auslösen, um auf das Ergebnis adäquat zu reagieren.

Das Ergebnis der Prüfungen, ob das bestimmte Zertifikatsprofil von der Anlagenkomponente verwendet werden kann, und - ob der Anlagenkomponente das bestimmte Zertifikatsprofil in der technischen Anlage zugewiesen werden darf, kann alternativ oder zusätzlich zu der visuellen Ausgabe in einem Archiv der technischen Anlage hinterlegt werden, beispielweise auf einem hierfür ausgebildeten Archivserver.

Unter einem Leitsystem wird im vorliegenden Kontext ein computergestütztes, technisches System verstanden, das Funktionalitäten zum Darstellen, Bedienen und Leiten der verfahrenstechnischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber kann das Leitsystem u.a. Mittel zur Visualisierung der verfahrenstechnischen Anlage und zu einem Engineering aufweisen. Unter dem Begriff Leitsystem sind zusätzlich auch weitere Recheneinheiten für komplexere Regelungen und Systeme zur Datenspeicherung und - verarbeitung zu fassen.

In den Regeln kann auch ein Typ einer Registrierung der Anlagenkomponente gegenüber der Registrierungsstelle der technischen Anlage berücksichtigt werden. Mit anderen Worten kann können die Regeln von dem zur Registrierung verwendeten Ansatz (wie z.B. OPC UA und/oder BRSKI) abhängen.

In dem durch den Inventardienst bestimmten Geräteinventar können neben dem ausgestellten Zertifikat weitere Informationen abgelegt sein bzw. werden, welche die Anlagenkomponente betreffen. Diese können dem Zertifikatsantrag der Anlagenkomponente entnommen werden und beispielsweise Informationen über eine Identität, einen Einbauort, eine Betriebsart oder einen Typ der Anlagenkomponente umfassen.

Die zuvor formulierte Aufgabe wird außerdem gelöst durch eine computerimplementierte Registrierungsstelle oder eine vergleichbare Instanz bzw. einen entsprechend vergleichbaren Service für eine technischen Anlage, die dazu ausgebildet ist, von einer Anlagenkomponente der technischen Anlage einen von der Anlagenkomponente oder von einem Stellvertreter für die Anlagenkomponente gestellten Zertifikatsantrag zu empfangen, wobei die computerimplementierte Registrierungsstelle einen computerimplementierten Inventardienst aufweist, welcher dazu ausgebildet ist, unter Einbezug von vorherbestimmten und der Registrierungsstelle zugänglichen Regeln, automatisiert zu bestimmen, welches computerimplementierte Geräteinventar einer Mehrzahl von computerimplementierten Geräteinventaren der technischen Anlage der Anlagenkomponente zugeordnet ist, und wobei die computerimplementierte Registrierungsstelle dazu ausgebildet ist, den Zertifikatsantrag an eine computerimplementierte Zertifizierungsstelle der technischen Anlage weiterzuleiten, und wobei die computerimplementierte Registrierungsstelle dazu ausgebildet ist, ein von der computerimplementierten Zertifizierungsstelle ausgestelltes Zertifikat in dem zuvor bestimmten Geräteinventar zu hinterlegen.

Die Registrierungsstelle kann beispielsweise auf einem Operator Station Server eines Leitsystems implementiert sein. Unter einem "Operator Station Server" wird dabei ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen. Bei dem Operator Station Server kann es sich, ohne sich darauf zu beschränken, um einen SIMATIC PCS 7 Industrial Workstation Server der Firma SIEMENS handeln.

Die computerimplementierte Registrierungsstelle kann dazu ausgebildet sein, vor dem Übermitteln des Zertifikatsantrages an eine Zertifizierungsstelle der technischen Anlage automatisiert zu prüfen, ob der an die computerimplementierte Registrierungsstelle übermittelte Zertifikatsantrag gültig ist.

Dabei kann die computerimplementierte Registrierungsstelle dazu ausgebildet sein, die Prüfung, ob der Anlagenkomponente das bestimmte Zertifikatsprofil in der technischen Anlage zugewiesen werden darf, auf der Grundlage von Vorgaben eines Operators und/oder auf der Grundlage einer Automatisierung der technischen Anlage vorzunehmen.

Die Regeln können in einer der computerimplementierten Registrierungsstelle zugeordneten Konfigurationsdatenbank hinterlegt sein. Sie können durch einen Benutzer der technischen Anlage oder im Rahmen eines maschinellen Lernens veränderbar sein.

In den Regeln kann ein Zertifikatsprofil der Anlagenkomponente und/oder ein Antragstellerprofil eines Antragstellers, welcher den Zertifikatsantrag für die Anlagenkomponente stellt, und/oder ein Typ einer Registrierung der Anlagenkomponente gegenüber der Registrierungsstelle der technischen Anlage berücksichtigt werden.

Die zuvor formulierte Aufgabe wird zudem gelöst durch ein System, das eine computerimplementierte Registrierungsstelle, die wie zuvor erläutert ausgebildet ist, eine computerimplementierte Zertifizierungsstelle, eine Mehrzahl von computerimplementierten Geräteinventaren und wenigstens eine Anlagenkomponente umfasst, wobei das System dazu ausgebildet ist, ein Verfahren wie zuvor erläutert durchzuführen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur ist ein erfindungsgemäßes System 1 schematisch dargestellt. Das System 1 umfasst eine Anlagenkomponente 2, eine auf einem Operator Station Server computerimplementierte Registrierungsstelle 3, drei computerimplementierte Geräteinventare 4a, 4b, 4c und eine computerimplementierte Zertifizierungsstelle 5. Die Anlagenkomponente 2 ist mit dem Operator Station Server bzw. der hierauf implementierten Registrierungsstelle 3 verbunden. Analog dazu verfügt die Zertifizierungsstelle 5 über eine Verbindung zu dem Operator Station Server mit der hierauf implementierten Registrierungsstelle 4.

Die Registrierungsstelle 4 ist in an sich bekannter Weise dazu ausgebildet, Zertifikatsanträge von der Anlagenkomponente 2 entgegenzunehmen und an die Zertifizierungsstelle 5 weiterzuleiten. Darüber hinaus ist die Registrierungsstelle 4 dazu ausgebildet, von der Zertifizierungsstelle 5 ausgestellte Zertifikate entgegenzunehmen und an die Anlagenkomponente 2 weiterzuleiten. Die Zertifizierungsstelle 5 ist dazu ausgebildet, Zertifikatsanträge zu prüfen und für den Fall, dass bestimmte Prüfkriterien erfüllt sind, das beantragte Zertifikat auszustellen. Darüber hinaus kann die Zertifizierungsstelle 5 auch bereits ausgestellte Zertifikate wieder revozieren, worauf jedoch im vorliegenden Kontext nicht weiter eingegangen wird.

Ein erfindungsgemäßes Verfahren umfasst die im Folgenden erläuterten Verfahrensschritte. In einem ersten Schritt prüft die Anlagenkomponente 2, ob ein Zertifikatsantrag für ein Zertifikat mit einem bestimmten Zertifikatsprofil, dessen Generierung von einem Operator oder automatisiert von einer Softwarekomponente einer technischen Anlage angestoßen wurde, gestellt werden darf. Dabei prüft die Anlagenkomponente 2 selbst, durch einen dazugehörigen Mikroprozessor, ob das bestimmte Zertifikatsprofil, welches Gegenstand des Zertifikatsantrags ist, von der Anlagenkomponente 2 verwendet werden kann. Ist dies nicht der Fall, wird die Generierung des Zertifikatsantrags abgelehnt. Für den Fall, dass das Ergebnis der Prüfung erfolgreich ist, wird der Zertifikatsantrag an die Registrierungsstelle 4 weitergeleitet. Die Datenübertragung kann über einen Feldbus, beispielsweise Industrial Ethernet, erfolgen.

In einem zweiten Schritt nimmt ein erster Teildienst 6a eines Inventardienstes der Registrierungsstelle 4 den Zertifikatsantrag entgegen und prüft, ob der Antragssteller ihr bekannt ist. Diese Prüfung erfolgt in an sich bekannter Weise durch einen Abgleich der Daten des Zertifikatsantrags (insbesondere die Daten, die eine Identität des Antragsstellers betreffen) mit einem der der Registrierungsstelle 4 zugeordneten Geräteinventare 4a, 4b, 4c. Hierfür bestimmt ein zweiter Teildienst 6b des Inventardienstes der Registrierungsstelle 4 unter Einbezug von vorherbestimmten und der Registrierungsstelle 4 zugänglichen Regeln automatisiert, welches computerimplementierte Geräteinventar 4a, 4b, 4c der Mehrzahl von computerimplementierten Geräteinventaren der technischen Anlage der Anlagenkomponente 2 zugeordnet ist. Die Regeln sind dabei in einer computerimplementierten Konfigurationsdatenbank 7, welche der Registrierungsstelle 4 zugeordnet und gleichfalls auf dem Operator Station Server realisiert ist.

Die als zutreffend / relevant für einen bestimmten Zertifikatsantrag ermittelten Regeln bzw. die anhand dieser Regeln als relevant ermittelten Verbindungsdaten werden in einem Speicher 12 des Inventardienstes ablegt und daraufhin im Bedarfsfall zur Ermittlung der Verbindungsdaten zu dem betreffenden Geräteinventar 4a, 4b, 4c verwendet. Dies kann beispielsweise dann der Fall sein, wenn der zur erstmaligen Ausstellung eines LDevID-Zertifikats (d.h. eines LDevID-Generic- oder LDevID-App-Zertifikats) verwendete Zertifikatsantrag samt den anhand der relevanten Regeln verwendeten Verbindungsdaten in dem Speicher 12 des Inventardienstes abgelegt wird. Sobald ein Erneuerungsantrag bzw. Update-Antrag zum gleichen Zertifikat kommt, können die gleichen, bereits ermittelten Regeln und die gleichen Verbindungsdaten verwendet werden.

Für den Fall, dass der Antragssteller der Registrierungsstelle 4 nicht bekannt ist, wird der Zertifikatsantrag abgelehnt.

Für den Fall, dass der Antragssteller ihr bekannt ist, wird ein nachfolgender dritter Schritt durchgeführt. Im Rahmen des nächsten Schrittes prüft die Registrierungsstelle 4, ob der Zertifikatsantrag, genauer gesagt dessen Signatur, nach RFC5280 korrekt und valide ist. Mit anderen Worten prüft die Registrierungsstelle 4, ob die Signatur des Zertifikatsantrags zum Zertifikatsantrag passt. Für den Fall, dass diese Prüfung nicht erfolgreich ist, wird der Zertifikatsantrag abgelehnt. Für den Fall einer erfolgreichen Prüfung wird ein nachfolgender Schritt durchgeführt.

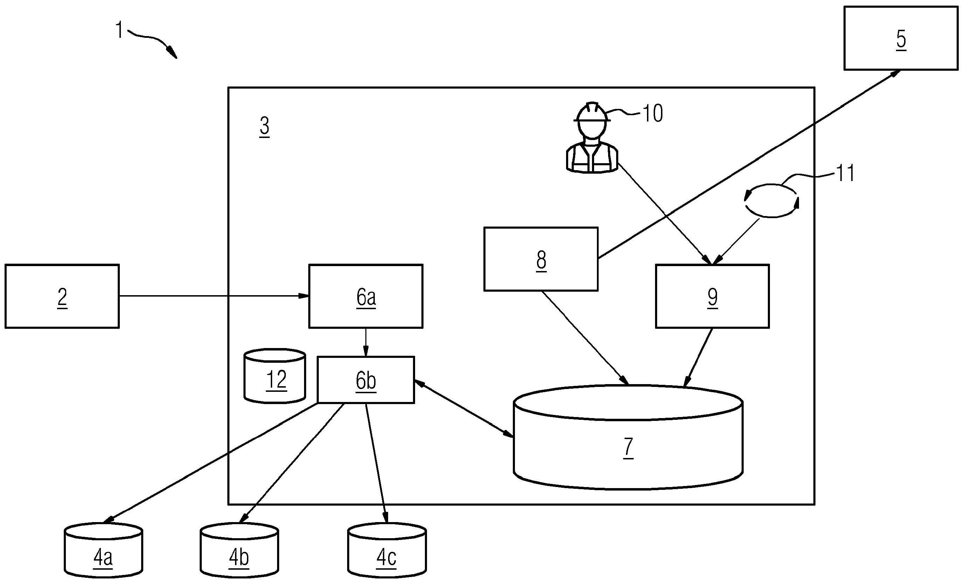

Die Registrierungsstelle 4 prüft nun, ob das zum Signieren des Zertifikatsantrags verwendete Zertifikat von einer (der Registrierungsstelle 4 bekannten) Zertifizierungsstelle ausgestellt wurde, zu der die Registrierungsstelle 4 bereits eine Vertrauensbeziehung aufweist. Dabei kann es sich um die in FIG 1 dargestellte Zertifizierungsstelle 5 handeln. Das Vorliegen der Vertrauensbeziehung kann beispielsweise bedeuten, dass die zugehörige Zertifikatskette in der Konfigurationsdatenbank 7 der Registrierungsstelle 4 abgelegt ist. Für den Fall, dass diese Prüfung nicht erfolgreich ist, wird der Zertifikatsantrag abgelehnt. Für den Fall einer erfolgreichen Prüfung wird ein nachfolgender Schritt durchgeführt.

Im Rahmen eines nächsten Schrittes prüft die Registrierungsstelle 4, ob das in dem Zertifikatsantrag beantragte bestimmte Zertifikatsprofil von der Anlagenkomponente 2 (überhaupt) verwendet werden kann. Welches Zertifikatsprofil beantragt wird, kann die Registrierungsstelle 4 dem Zertifikatsantrag entweder unmittelbar oder mittelbar über eine in dem Zertifikatsantrag referenzierte Quelle (beispielsweise eine URL) entnehmen. Die Anlagenkomponente 2 kann diese Prüfung auch bereits selbst vorgenommen haben. Falls es sich jedoch um eine heterogene Umgebung / technische Anlage handelt, in der nicht jede Anlagenkomponente 2 diese Prüfung nachweisbar vornehmen kann, ist es empfehlenswert, diese Prüfung durch die Registrierungsstelle 4 für alle eingehenden Zertifikatsanträge durchführen zu lassen. Für den Fall, dass diese Prüfung nicht erfolgreich ist, wird der Zertifikatsantrag abgelehnt. Für den Fall einer erfolgreichen Prüfung wird ein nachfolgender Schritt durchgeführt.

Im Rahmen des nächsten Schrittes prüft die Registrierungsstelle 4, ob der Anlagenkomponente 2 das bestimmte Zertifikatsprofil in der technischen Anlage zugewiesen werden darf. Dabei kann sie die Prüfung auf Grundlage von Vorgaben eines Operators oder auf Grundlage einer Automatisierung der technischen Anlage, die insbesondere durch ein selbstlernendes System aktuell gehalten werden kann, vornehmen. Für den Fall, dass diese Prüfung nicht erfolgreich ist, wird der Zertifikatsantrag abgelehnt. Für den Fall einer erfolgreichen Prüfung wird ein nachfolgender Schritt durchgeführt.

Im Rahmen des nächsten Schrittes wird der Zertifikatsantrag von einem Übermittlungsdienst 8 der Registrierungsstelle 3 an die Zertifizierungsstelle 5 weitergeleitet. Diese prüft, ob der Zertifikatsantrag gültig ist und stellt im Erfolgsfall das beantragte Zertifikat aus. Dieses wird von der Zertifizierungsstelle 5 über die Registrierungsstelle 4 an die Anlagenkomponente 2 übertragen. Zudem wird das Zertifikat in dem zuvor von dem zweiten Teildienst 6b des Inventardienstes bestimmten Geräteinventar 4a hinterlegt. Die Anlagenkomponente 2 kann daraufhin beispielsweise mit weiteren Anlagenkomponenten einer technischen Anlage, in welcher sich das System 1 befinden kann, kommunizieren.

Die Registrierungsstelle 3 weist weiterhin einen Regeldienst 9 auf, welcher die Regeln für das Bestimmen des betreffenden Geräteinventars 4a, 4b, 4c in der Konfigurationsdatenbank 7 hinterlegt. Die Regeln können beispielsweise von einem Nutzer 10 vorgegeben werden. Alternativ oder zusätzlich können die Regeln im Rahmen eines maschinellen Lernens 11 vorgebbar bzw. veränderbar sein.

Durch die beschriebene Erfindung kann unter anderem sichergestellt werden, dass in einer OT-Umgebung/ einer industriellen Anlage nur die Zertifikate bei der entsprechenden Zertifizierungsstelle beantragt und von dieser ausgestellt werden, die die folgenden Voraussetzungen erfüllen:
- Das Zertifikatsprofil wird vom Antragsteller durch dessen Funktionsumfang unterstützt.
- Der Antragsteller benötigt dieses Zertifikat (bzw. dessen Zertifikatsprofil) im Kontext der jeweiligen industriellen Anlage/ OT-Umgebung.

Die Ausstellung überflüssiger Zertifikate kann durch die Erfindung im Wesentlichen vollständig unterbunden werden, wodurch ein fundierter Beitrag zu den folgenden signifikanten Verbesserungen geleistet wird:
- zur Optimierung/Minimierung des zur Speicherung der Zertifikate im Certificate Store der Anlagenkomponenten benötigten Speicherplatzes;
- zur Optimierung/Minimierung des zur Speicherung der Zertifikate im Inventory / Repository der OT-Umgebung / der industriellen Anlage benötigten Speicherplatzes;
- zur Optimierung/Minimierung des Verwaltungsaufwandes zur Verwaltung der in der OT/Umgebung bzw. in der industriellen Anlage ausgestellten Zertifikate (denn auch überflüssige Zertifikate werden aktuell erfahrungsgemäß von den Anlagenkomponenten bzw. von anderen Instanzen auf deren Ablauf überwacht und kurz vor deren Ablauf mit der Unterstützung von RA/CA entsprechend erneuert);
- zur Optimierung des Kommunikationsaufkommens (denn unnötige/überflüssige Zertifikatsanträge werden nicht an die Registrierungsstelle bzw. an die Zertifizierungsstelle weitergeleitet und die anschließende Ausstellung der auf diesen Zertifikatsanträgen basierenden (überflüssigen/unnötigen)

Zertifikate sowie die Übermittlung dieser Zertifikate an die Antragsteller finden gar nicht statt;
- zur Aufrechterhaltung des Normalbetriebs und der Verfügbarkeit der OT-Umgebung/Anlage (aufgrund aller o.g. Vorteile)
- zur Krypto-Agilität, denn die in der vorliegenden Erfindung eingeführten zertifikatsspezifischen Geräte- und Antragsteller-Profile eine sehr hohe Flexibilität und Konfigurierbarkeit aufweisen, die insb. in dem Fall, wenn ein verwendeter kryprographischer Algorithmus gebrochen wurde oder (z.B. in einem bestimmten Land) nicht zum Einsatz kommen darf, einen schnellen Ersatz dieses Algorithmus durch einen anderen adäquaten Algorithmus ermöglicht.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Ausstellung eines Zertifikats an eine Anlagenkomponente (2) einer technischen Anlage durch eine computerimplementierte Zertifizierungsstelle (5) der technischen Anlage, umfassend:
a) Übermitteln eines von der Anlagenkomponente (2) gestellten Zertifikatsantrages an eine computerimplementierte Registrierungsstelle (3) der technischen Anlage;
b) Durch einen computerimplementierten Inventardienst (6a, 6b) der computerimplementierten Registrierungsstelle (3) und unter Einbezug von vorherbestimmten und der Registrierungsstelle (3) zugänglichen Regeln, automatisiertes Bestimmen, welches computerimplementierte Geräteinventar (4a, 4b, 4c) einer Mehrzahl von computerimplementierten Geräteinventaren (4a, 4b, 4c) der technischen Anlage der Anlagenkomponente (2) zugeordnet ist;
c) Weiterleiten des Zertifikatsantrages durch die computerimplementierten Registrierungsstelle (3) an die computerimplementierte Zertifizierungsstelle (5);
d) Ausstellen des durch den Zertifikatsantrag beantragten Zertifikats durch die Zertifizierungsstelle (5) und Hinterlegen des ausgestellten Zertifikats in dem zuvor bestimmten Geräteinventar (4a, 4b, 4c).

2. Verfahren nach Anspruch 1, bei dem vor der Weiterleitung des Zertifikatsantrags geprüft wird, ob der an die computerimplementierte Registrierungsstelle (3) übermittelte Zertifikatsantrag gültig ist, wobei vorzugsweise auf Daten zurückgegriffen wird, die in dem der Anlagenkomponente (2) zugeordneten Geräteinventar (4a, 4b, 4c) hinterlegt sind, wobei die Daten unter Berücksichtigung eines der Anlagenkomponente zugeordneten Antragstellerprofils und von dem Antragstellerprofil zugeordneten Zertifikatsprofilen ausgewählt werden.

3. Verfahren nach Anspruch 1 oder 2, bei dem die Regeln in einer der computerimplementierten Registrierungsstelle (3) zugeordneten Konfigurationsdatenbank (7) hinterlegt sind.

4. Verfahren nach einem der vorangegangenen Ansprüche, bei dem die Regeln durch einen Benutzer (10) der technischen Anlage veränderbar sind.

5. Verfahren nach einem der vorangegangenen Ansprüche, bei dem die Regeln im Rahmen eines maschinellen Lernens (11) veränderbar sind.

6. Verfahren nach einem der vorangegangenen Ansprüche, bei dem in den Regeln ein Zertifikatsprofil des mit dem Zertifikatsantrag beantragten Zertifikats und/oder ein Antragstellerprofil eines Antragstellers, welcher den Zertifikatsantrag für die Anlagenkomponente (2) stellt, berücksichtigt wird.

7. Verfahren nach einem der vorangegangenen Ansprüche, bei dem in den Regeln ein Typ einer Registrierung der Anlagenkomponente (2) gegenüber der Registrierungsstelle (3) der technischen Anlage berücksichtigt wird.

8. Verfahren nach einem der vorangegangenen Ansprüche, bei dem wenigstens eines der Mehrzahl von computerimplementierten Geräteinventaren (4a, 4b, 4c) in einer cloudbasierten Umgebung realisiert ist.

9. Verfahren nach einem der vorangegangenen Ansprüche, bei dem zusätzlich zu dem ausgestellten Zertifikat weitere Informationen über die Anlagenkomponente (2) in dem bestimmten computerimplementierten Geräteinventar (4a, 4b, 4c) hinterlegt werden.

10. Computerimplementierte Registrierungsstelle (3) für eine technische Anlage, die dazu ausgebildet ist, von einer Anlagenkomponente (2) der technischen Anlage einen von der Anlagenkomponente (2) oder von einem Stellvertreter für die Anlagenkomponente (2) gestellten Zertifikatsantrag zu empfangen, wobei die computerimplementierte Registrierungsstelle (3) einen computerimplementierten Inventardienst (6a, 6b) aufweist, welcher dazu ausgebildet ist, unter Einbezug von vorherbestimmten und der Registrierungsstelle (3) zugänglichen Regeln, automatisiert zu bestimmen, welches computerimplementierte Geräteinventar (4a, 4b, 4c) einer Mehrzahl von computerimplementierten Geräteinventaren (4a, 4b, 4c) der technischen Anlage der Anlagenkomponente (2) zugeordnet ist,
und wobei die computerimplementierte Registrierungsstelle (3) dazu ausgebildet ist, den Zertifikatsantrag an eine computerimplementierte Zertifizierungsstelle (5) der technischen Anlage weiterzuleiten,
und wobei die computerimplementierte Registrierungsstelle (3) dazu ausgebildet ist, ein von der computerimplementierten Zertifizierungsstelle (5) ausgestelltes Zertifikat in dem zuvor bestimmten Geräteinventar (4a, 4b, 4c) zu hinterlegen.

11. Computerimplementierte Registrierungsstelle (3) gemäß Anspruch 10, die dazu ausgebildet ist, vor dem Übermitteln des Zertifikatsantrages an eine Zertifizierungsstelle (5) der technischen Anlage automatisiert zu prüfen, ob der an die computerimplementierte Registrierungsstelle (3) übermittelte Zertifikatsantrag gültig ist.

12. Computerimplementierte Registrierungsstelle (3) gemäß Anspruch 10 oder 11, bei der die Regeln in einer der computerimplementierten Registrierungsstelle (3) zugeordneten Konfigurationsdatenbank (7) hinterlegt sind.

13. Computerimplementierte Registrierungsstelle (3) gemäß einem der Ansprüche 10 bis 12, bei der die Regeln durch einen Benutzer (10) der technischen Anlage oder im Rahmen eines maschinellen Lernens (11) veränderbar sind.

14. Computerimplementierte Registrierungsstelle (3) gemäß einem der Ansprüche 10 bis 13, bei der in den Regeln ein Zertifikatsprofil der Anlagenkomponente (2) und/oder ein Antragstellerprofil eines Antragstellers, welcher den Zertifikatsantrag für die Anlagenkomponente (2) stellt, und/oder ein Typ einer Registrierung der Anlagenkomponente (2) gegenüber der Registrierungsstelle (3) der technischen Anlage berücksichtigt wird.

15. System, umfassend eine computerimplementierte Registrierungsstelle (3) gemäß Anspruch einem der Ansprüche 10 bis 14, eine computerimplementierte Zertifizierungsstelle (5), eine Mehrzahl von computerimplementierten Geräteinventaren (4a, 4b, 4c) und wenigstens eine Anlagenkomponente (2), wobei das System dazu ausgebildet ist, ein Verfahren gemäß einem der Ansprüche 1 bis 9 durchzuführen.
